# EUROPÄISCHE PATENTANMELDUNG

(11) **EP 3 170 544 A1**
(43) Veröffentlichungstag der Anmeldung: **24.05.2017**
(21) Anmeldenummer: 15195545.7
(22) Anmeldetag: 20.11.2015
(51) Int. Cl.: B01D 46/00, B01D 46/10, B01D 46/52

(54) **FILTERELEMENT MIT EINEM RAHMENELEMENT**

(71) Anmelder: Carl Freudenberg KG, 69469 Weinheim (DE)
(72) Erfinder: Lazarevic, Alexandra, 69488 Birkenau (DE)

(57) **Zusammenfassung**

Ein Filterelement, umfassend einen Faltenbalg (1) aus Vliesstoff, ist im Hinblick auf die Aufgabe, ein Filterelement anzugeben, welches bei kostengünstiger Herstellbarkeit leicht entsorgbar ist und in einem Endbereich verstärkt ist, dadurch gekennzeichnet, dass eine vorletzte Faltenwand (2a) und/ oder eine letzte Faltenwand (2) und/ oder ein letzter Faltenrücken (3) zumindest teilweise von einem Rahmenelement (4) aus Vliesstoff überlappt ist bzw. sind.

## Beschreibung

### Technisches Gebiet

Die Erfindung betrifft ein Filterelement gemäß dem Oberbegriff des Patentanspruchs 1 und ein Verfahren zur Herstellung eines solchen Filterelements.

### Stand der Technik

Aus der EP 1 616 736 A1 ist bereits ein solches Filterelement bekannt. In Fig. 5 der genannten Schrift ist ein Filterelement mit einem Faltenbalg gezeigt, bei welchem eine letzte Faltenwand und ein letzter Faltenrücken zumindest teilweise von einem Rahmenelement überlappt sind. Das dort bekannte Rahmenelement ist gummielastisch.

Elastomere und Gummi sind jedoch relativ teuer und nicht leicht entsorgbar.

### Darstellung der Erfindung

Der Erfindung liegt daher die Aufgabe zugrunde, ein Filterelement anzugeben, welches bei kostengünstiger Herstellbarkeit leicht entsorgbar ist und in einem Endbereich verstärkt ist.

Die vorliegende Erfindung löst die zuvor genannte Aufgabe durch die Merkmale des Patentanspruchs 1.

Erfindungsgemäß ist erkannt worden, dass ein Rahmenelement aus Vliesstoff kostengünstig ist. Des Weiteren ist erkannt worden, dass ein Filterelement mit einem Faltenbalg aus Vliesstoff und einem Rahmenelement aus Vliesstoff leicht veraschbar ist, da dieses sortenrein aufgebaut ist.

Das Rahmenelement könnte die letzten beiden Faltenwände und deren gemeinsamen Faltenrücken überlappen. Hierdurch wird ein Längsende eines Faltenbalgs besonders gut stabilisiert.

Von einer Fläche, welche die letzte Faltenwand überlappt, könnte ein Flächenschenkel mit einem freien Ende nach oben, nämlich in Richtung des Faltenrückens, abragen. Ein solcher Flächenschenkel kann als Dichtlippe an einem Filtergehäuse dichtend anliegen. Des Weiteren bildet der Flächenschenkel eine Geradkante, wenn er orthogonal zur Filterebene abragt.

Von einer Fläche, welche die letzte Faltenwand überlappt, könnte ein erster Flächenschenkel abragen, wobei von diesem ein zweiter Flächenschenkel mit einem freien Ende abragt. Der zweite Flächenschenkel kann orthogonal zum ersten orientiert sein, welcher wiederum orthogonal zur Filterebene orientiert ist. Der zweite Flächenschenkel ragt insoweit nicht über den Faltenbalg hinaus, sondern schließt bündig mit einem Seitenstreifen ab, der an Faltenkanten des Faltenbalgs anliegt. Bevorzugt sind beidseits des Faltenbalgs Seitenstreifen angeordnet.

Von einer Fläche, welche die letzte Faltenwand überlappt, könnte eine konvex gewölbte Endfläche abragen. Die konvex gewölbte Endfläche kann als Dichtung fungieren, da sie unter Spannung an eine Wandung eines Filtergehäuses anlegbar ist.

Von einer Fläche, welche nur die vorletzte Faltenwand überlappt, könnte eine konvex gewölbte Endfläche abragen. Die konvex gewölbte Endfläche kann als Dichtung fungieren, da sie unter Spannung an eine Wandung eines Filtergehäuses anlegbar ist. Bevorzugt übergreift die konvex gewölbte Endfläche die letzte Faltenwand.

Der Faltenbalg könnte mindestens einen sich in Längsrichtung des Faltenbalgs erstreckenden Seitenstreifen aufweisen. Der Seitenstreifen liegt an den Faltenkanten an und stabilisiert den Faltenbalg. Des Weiteren dient der Seitenstreifen als Dichtung.

Vor diesem Hintergrund ist denkbar, dass beidseits des Faltenbalgs je ein Seitenstreifen angeordnet ist. Hierdurch wird der Faltenbalg besonders gut stabilisiert.

Das Rahmenelement ist mit dem Faltenbalg bevorzugt verklebt oder verschweißt.

Das Rahmenelement könnte auch nur an seinen jeweils außenliegenden Kanten verklebt sein. Diese Kanten könnten jeweils mit beidseits angeordneten Seitenstreifen verklebt sein. Das Rahmenelement wird nur durch die Seitenstreifen fixiert, so dass eine flächige Beleimung mit der Endfalte nicht notwendig ist. Denkbar ist auch, nur die Kanten mit der letzten und/ oder vorletzten Faltenwand zu verkleben.

Durch das Aufbringen des Rahmenelements entsteht eine zusätzliche Dichtwirkung, da das Rahmenelement eine zusätzliche konvexe Endfalte mit hoher Eigensteifigkeit bildet. Es kann daher nahezu keine Leckage auftreten.

Beim Aufbringen einer einfachen Vliesstoffkante auf der Außenseite der Endfalten kann es zu Leckage kommen, da keine ausreichende Eigenspannung bzw. Stabilisierung der Endfalte erzielt werden kann. Die zusätzliche Spannung kommt durch das Zusammenspiel eines V-förmigen Rahmenelements und der seitlichen Verleimung der Kante zustande.

Ein Verfahren zum Herstellen eines Filterelements der hier beschriebenen Art umfasst die folgenden Verfahrensschritte:

Abtrennen eines Segments, welches aus mindestens zwei zusammenhängenden Rahmenelementen aus Vliesstoff besteht, von einem Primärfaltenbalg, Aufsetzen des Segments auf einen Sekundärfaltenbalg, Befestigen des Segments auf dem Sekundärfaltenbalg, vorzugsweise durch Verkleben oder Verschweißen, Abtrennen eines Faltenbalgs mit einem aufgesetzten Rahmenelement vom Sekundärfaltenbalg, indem ein Segment in zwei Teile getrennt wird.

Das Segment könnte in zwei gleiche Teile getrennt werden. So können Filterelemente ohne Nachbearbeitungsschritte kontinuierlich gefertigt werden.

### Kurzbeschreibung der Zeichnung

In der Zeichnung zeigen
- Fig. 1: ein Filterelement, bei welchem die letzten zwei Faltenwände und deren gemeinsamer Faltenrücken von einem flächigen Rahmenelement überlappt sind,
- Fig. 2: ein Filterelement, bei welchem die letzten zwei Faltenwände und deren gemeinsamer Faltenrücken von einem flächigen Rahmenelement überlappt sind, wobei das Rahmenelement einen orthogonal zur Filterebene orientierten Flächenschenkel aufweist, der mit einem freien Ende nach oben, nämlich in Richtung des Faltenrückens, ragt,
- Fig. 3: ein Filterelement, bei welchem die letzten zwei Faltenwände und deren gemeinsamer Faltenrücken von einem flächigen Rahmenelement überlappt sind, wobei das Rahmenelement einen ersten orthogonal zur Filterebene orientierten Flächenschenkel aufweist, an den sich ein zweiter Flächenschenkel anschließt, der mit einem freien Ende in Richtung des Faltenrückens ragt und dabei parallel zur Filterebene orientiert ist,
- Fig. 4: ein Filterelement, bei welchem die letzten zwei Faltenwände und deren gemeinsamer Faltenrücken von einem flächigen Rahmenelement überlappt sind, wobei das Rahmenelement eine konvex gewölbte Endfläche aufweist,
- Fig. 5: ein Filterelement, bei welchem die vorletzte Faltenwand und der letzte Faltenrücken von einem flächigen Rahmenelement überlappt sind, und wobei das Rahmenelement eine konvex gewölbte Endfläche aufweist, und
- Fig. 6: in schematischer Darstellung die Verfahrensschritte zum Herstellen von Filterelementen der hier beschriebenen Art.

### Ausführung der Erfindung

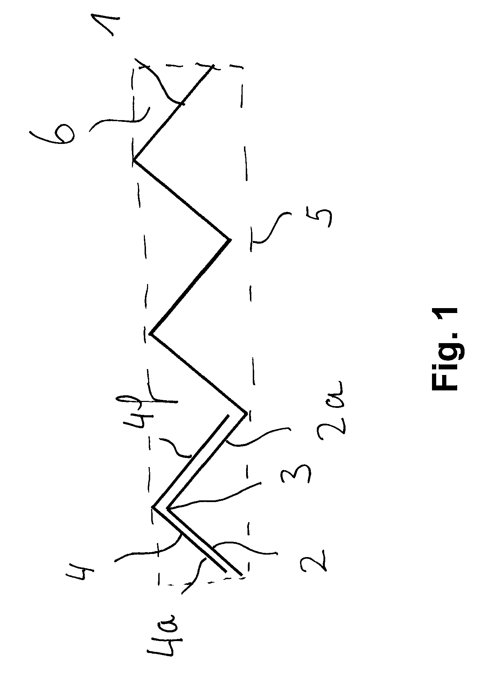

Fig. 1 zeigt ein Filterelement, umfassend einen Faltenbalg 1 aus Vliesstoff, wobei eine letzte Faltenwand 2 und ein letzter Faltenrücken 3 zumindest teilweise von einem Rahmenelement 4 aus Vliesstoff überlappt sind. Das Rahmenelement 4 überlappt die letzten beiden Faltenwände 2, 2a und deren gemeinsamen Faltenrücken 3.

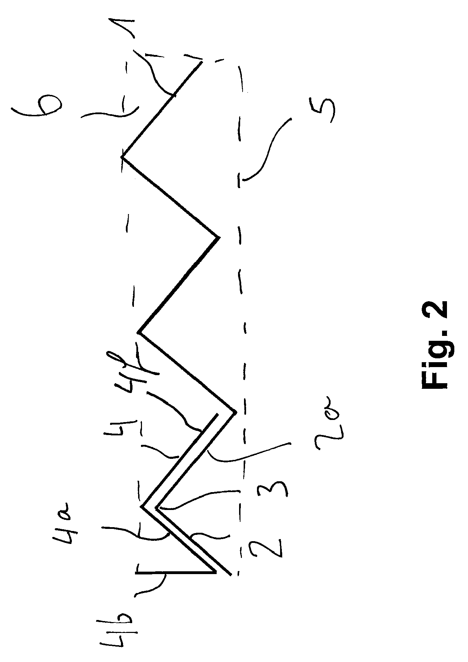

Fig. 2 zeigt ein Filterelement, bei welchem von einer Fläche 4a, welche die letzte Faltenwand 2 überlappt, ein Flächenschenkel 4b mit einem freien Ende nach oben, nämlich in Richtung des Faltenrückens 3, abragt.

Fig. 2 zeigt konkret ein Filterelement, bei welchem die letzten zwei Faltenwände 2, 2a und deren gemeinsamer Faltenrücken 3 von einem flächigen Rahmenelement 4 überlappt sind, wobei das Rahmenelement 4 einen orthogonal zur Filterebene 5 orientierten Flächenschenkel 4b aufweist, der mit einem freien Ende nach oben, nämlich in Richtung des Faltenrückens 3, ragt.

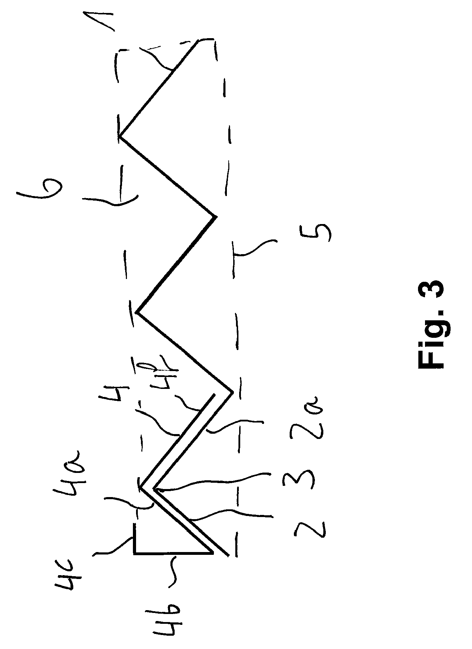

Fig. 3 zeigt ein Filterelement, bei welchem von einer Fläche 4a, welche die letzte Faltenwand 2 überlappt, ein erster Flächenschenkel 4b abragt, wobei von diesem ein zweiter Flächenschenkel 4c mit einem freien Ende abragt.

Fig. 3 zeigt konkret ein Filterelement, bei welchem die letzten zwei Faltenwände 2, 2a und deren gemeinsamer Faltenrücken 3 von einem flächigen Rahmenelement 4 überlappt sind, wobei das Rahmenelement 4 einen ersten orthogonal zur Filterebene 5 orientierten Flächenschenkel 4b aufweist, an den sich ein zweiter Flächenschenkel 4c anschließt, der mit einem freien Ende in Richtung des Faltenrückens 3 ragt und dabei parallel zur Filterebene 5 orientiert ist.

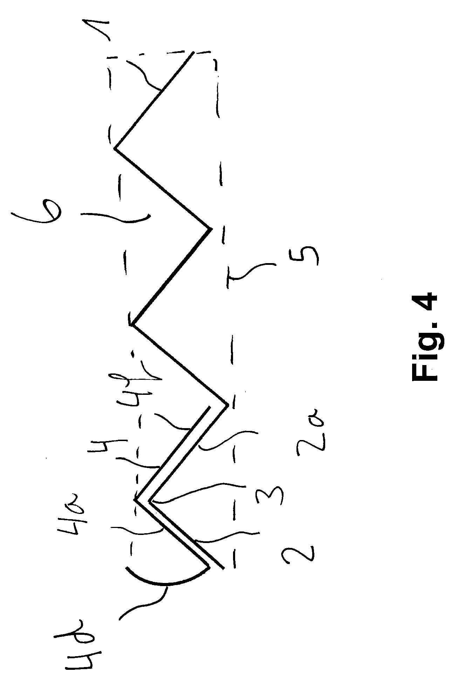

Fig. 4 zeigt ein Filterelement, bei welchem von einer Fläche 4a, welche die letzte Faltenwand 2 überlappt, eine konvex gewölbte Endfläche 4d abragt.

Fig. 4 zeigt konkret ein Filterelement, bei welchem die letzten zwei Faltenwände 2, 2a und deren gemeinsamer Faltenrücken 3 von einem flächigen Rahmenelement 4 überlappt sind, wobei das Rahmenelement 4 eine konvex gewölbte Endfläche 4d aufweist. Die konvex gewölbte Endfläche 4d weist ein freies Ende auf, welches nach oben, nämlich in Richtung des Faltenrückens 3, ragt.

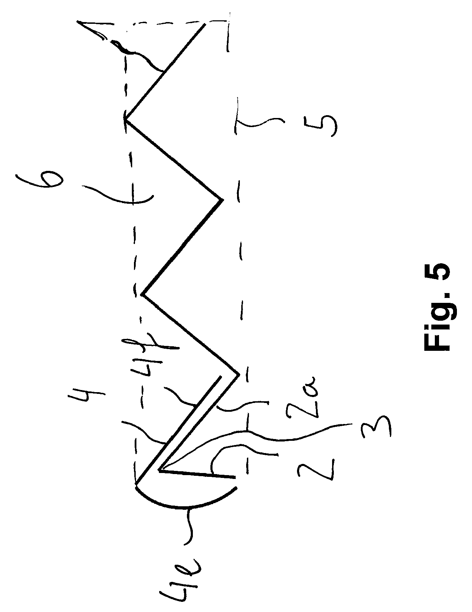

Fig. 5 zeigt ein Filterelement, bei welchem von einer Fläche 4f, welche nur die vorletzte Faltenwand 2a überlappt, eine konvex gewölbte Endfläche 4e abragt. Die konvex gewölbte Endfläche 4e weist ein freies Ende auf, welches nach unten, nämlich in Richtung des freien Endes der letzten Endfalte 2, ragt.

Fig. 5 zeigt konkret ein Filterelement, bei welchem die vorletzte Faltenwand 2a und der letzte Faltenrücken 3 von einem flächigen Rahmenelement 4 überlappt sind, wobei das Rahmenelement 4 eine konvex gewölbte Endfläche 4e aufweist. Die letzte Faltenwand 2 ist frei verschwenkbar und nicht am Rahmenelement 4 angelegt.

In den Fig. 1 bis 5 ist gezeigt, dass der Faltenbalg 1 mindestens einen sich in Längsrichtung des Faltenbalgs 1 erstreckenden Seitenstreifen 6 aufweist, wobei beidseits des Faltenbalgs 1 je ein Seitenstreifen 6 angeordnet ist.

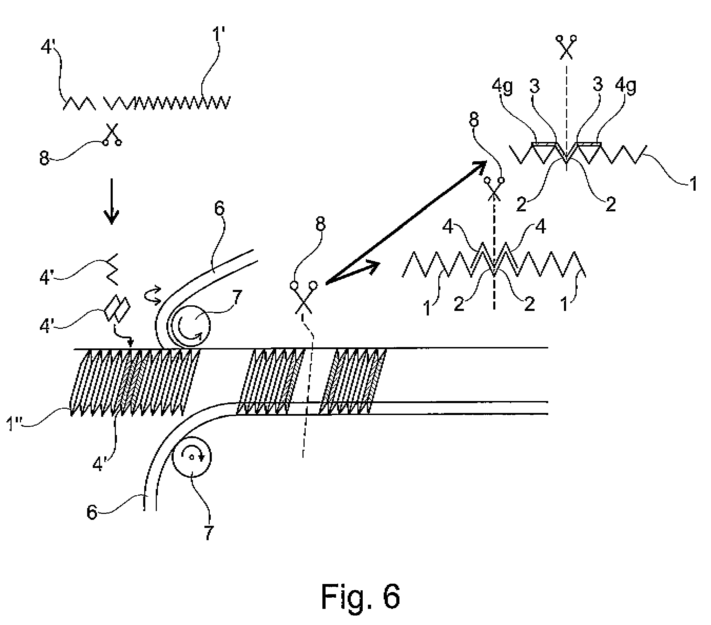

Fig. 6 zeigt ein Verfahren zum Herstellen eines Filterelements der hier beschriebenen Art, umfassend die folgenden Verfahrensschritte:

Abtrennen eines Segments 4', welches aus mindestens zwei zusammenhängenden Rahmenelementen 4 aus Vliesstoff besteht, von einem Primärfaltenbalg 1', Aufsetzen des Segments 4' auf einen Sekundärfaltenbalg 1", der kontinuierlich zwischen zwei Walzen 7 geführt ist, Befestigen des Segments 4' auf dem Sekundärfaltenbalg 1 ", bevorzugt durch Verkleben oder Verschweißen, wobei beidseits des Sekundärfaltenbalgs 1" Seitenstreifen 6 durch die Walzen 7 an den Sekundärfaltenbalg 1" angepresst und mit diesem verklebt oder verschweißt werden, und Abtrennen eines Faltenbalgs 1 mit einem aufgesetzten Rahmenelement 4 vom Sekundärfaltenbalg 1 ", indem ein Segment 4' in zwei Teile getrennt wird. Das Segment 4' wird in zwei gleiche Teile getrennt. Das Trennen oder Abtrennen erfolgt durch Schneidwerkzeuge 8. Ein Schneidwerkzeug 8 durchschneidet zugleich sowohl das Segment 4` als auch den Sekundärfaltenbalg 1", um den Faltenbalg 1 des Filterelements von diesem zu lösen. Der abgetrennte Faltenbalg 1 weist dann ein aufgesetztes Rahmenelement 4 auf.

Das Verfahren erlaubt das Vereinzeln von Filterelementen aus einem Sekundärfaltenbalg. Es können so fertige Filterelemente hergestellt werden, die beidseits mit Rahmenelementen 4 versehen sind.

In Fig. 6 sind zwei Filterelemente dargestellt, die durch das zuvor genannte Verfahren, aber auch in anderer Weise, herstellbar sind.

Das untere in Fig. 6 rechts gezeigte Filterelement umfasst einen Faltenbalg 1 aus Vliesstoff, wobei eine letzte Faltenwand 2 und ein letzter Faltenrücken 3 von einem Rahmenelement 4 aus Vliesstoff überlappt sind. Das Rahmenelement 4 überlappt die letzten beiden Faltenwände 2, 2a und deren gemeinsamen Faltenrücken 3, wie dies auch in Fig. 1 gezeigt ist.

Das obere in Fig. 6 rechts gezeigte Filterelement umfasst einen Faltenbalg 1 aus Vliesstoff, bei welchem eine letzte Faltenwand 2 und ein letzter Faltenrücken 3 von einem Rahmenelement 4 aus Vliesstoff überlappt sind. Ein Flächenschenkel 4g ragt parallel zur Ebene, in der die Faltenrücken liegen mit einem freien Ende ab und liegt nicht an einer Faltenwand 2a an, wie sie in Fig. 1 gezeigt ist.

## Patentansprüche

1. Filterelement, umfassend einen Faltenbalg (1) aus Vliesstoff, **dadurch gekennzeichnet, dass** eine vorletzte Faltenwand (2a) und/ oder eine letzte Faltenwand (2) und/ oder ein letzter Faltenrücken (3) zumindest teilweise von einem Rahmenelement (4) aus Vliesstoff überlappt ist bzw. sind.

2. Filterelement nach Anspruch 1, **dadurch gekennzeichnet, dass** das Rahmenelement (4) die letzten beiden Faltenwände (2a, 2) und deren gemeinsamen Faltenrücken (3) überlappt.

3. Filterelement nach Anspruch 1 oder 2, **dadurch gekennzeichnet, dass** von einer Fläche (4a), welche die letzte Faltenwand (2) überlappt, ein Flächenschenkel (4b) mit einem freien Ende in Richtung des Faltenrückens (3) abragt.

4. Filterelement nach Anspruch 1 oder 2, **dadurch gekennzeichnet, dass** von einer Fläche (4a), welche die letzte Faltenwand (2) überlappt, ein erster Flächenschenkel (4b) abragt, wobei von diesem ein zweiter Flächenschenkel (4c) mit einem freien Ende abragt.

5. Filterelement nach einem der voranstehenden Ansprüche, **dadurch gekennzeichnet, dass** von einer Fläche (4a), welche die letzte Faltenwand (2) überlappt, eine konvex gewölbte Endfläche (4d) abragt.

6. Filterelement nach einem der Ansprüche 1 bis 4, **dadurch gekennzeichnet, dass** von einer Fläche (4f), welche die vorletzte Faltenwand (2a) überlappt, eine konvex gewölbte Endfläche (4e) abragt.

7. Filterelement nach einem der voranstehenden Ansprüche, **dadurch gekennzeichnet, dass** der Faltenbalg (1) mindestens einen sich in Längsrichtung des Faltenbalgs (1) erstreckenden Seitenstreifen (6) aufweist.

8. Filterelement nach dem voranstehenden Anspruch, **dadurch gekennzeichnet, dass** beidseits des Faltenbalgs (1) je ein Seitenstreifen (6) angeordnet ist.

9. Verfahren zum Herstellen eines Filterelements nach einem der voranstehenden Ansprüche, umfassend die folgenden Verfahrensschritte:
Abtrennen eines Segments (4'), welches aus mindestens zwei zusammenhängenden Rahmenelementen (4) aus Vliesstoff besteht, von einem Primärfaltenbalg (1'),
Aufsetzen des Segments (4') auf einen Sekundärfaltenbalg (1"),
Befestigen des Segments (4') auf dem Sekundärfaltenbalg (1"),
Abtrennen eines Faltenbalgs (1) mit einem aufgesetzten Rahmenelement (4) vom Sekundärfaltenbalg (1 "), indem ein Segment (4') in zwei Teile getrennt wird.

10. Verfahren nach Anspruch 9, **dadurch gekennzeichnet, dass** das Segment (4') in zwei gleiche Teile getrennt wird.
